# EUROPÄISCHE PATENTSCHRIFT

(11) **EP 1 568 950 B1**
(45) Veröffentlichungstag und Bekanntmachung des Hinweises auf die Patenterteilung: **08.04.2009**
(21) Anmeldenummer: 04004277.2
(22) Anmeldetag: 25.02.2004
(51) Int. Cl.: F24J 2/52, E04F 13/08

(54) **System zur Festlegung flächiger Solarkomponenten**
Device for fixing flat solar components
Dispositif de fixation de composants solaires plats

(43) Veröffentlichungstag der Anmeldung: 31.08.2005
(73) Patentinhaber: Küchler, Eva, 91352 Hallerndorf (DE)
(72) Erfinder: Küchler, Eva, 91352 Hallerndorf (DE)
(74) Vertreter: Küchler, Stefan

(56) Entgegenhaltungen:
- DE-A- 2 353 611
- DE-A- 3 500 694
- DE-A- 10 054 349
- DE-B- 1 277 541
- DE-U- 20 215 867
- FR-A- 2 540 921

## Beschreibung

Die Erfindung richtet sich auf ein System zur Festlegung flächiger Solarkomponenten an Punktfundamenten oder -verankerungen, umfassend wenigstens zwei langgestreckte Tragelemente, wenigstens zwei langgestreckte Halteprofile und wenigstens zwei Spann- oder Klemmelemente, wobei zwischen den Punktfundamenten oder -verankerungen langgestreckte Tragelemente, insbesondere gespannte Drahtseile, verlegt oder verlegbar sind, und wobei an den Tragelementen oder an zwischen diesen festgelegten, weiteren langgestreckten Tragelementen wenigstens zwei langgestreckte, zu den Tragelementen vorzugsweise windschief oder winklig, insbesondere etwa orthogonal verlaufende Halteprofile festlegbar sind, und wobei die Halteprofile entlang der Tragelemente aufeinander zu bzw. an eine dazwischen eingesetzte Solarkomponente heranschiebbar und/oder anpressbar sind.

Derzeit werden Solarmodule mit einem vergleichsweise großen Aufwand an Gestellen befestigt, wodurch die Kosten für eine Solaranlage nicht unerheblich erhöht werden und wozu außerdem eine sehr tragfähige Unterkonstruktion erforderlich ist.

Darüber hinaus erlauben viele bekannte Befestigungsmethoden keinerlei Nachführung der Solarmodule nach dem Sonnenstand, weder hinsichtlich der von Ost nach West wandernden Sonne noch hinsichtlich des jahreszeitlich schwankenden Höchststandes derselben, so dass ein nicht unerheblicher Teil der theoretisch zur Verfügung stehenden Strahlungsleistung verloren geht.

Das Dokument DE 35 00 694 A1 betrifft ein Solarkraftwerk mit ebenflächigen Platten zur Aufnahme von Halbleitersolarzellen und/oder Wärmekollektoren, mit einem turmähnlichen Gebilde, woran ein Ausleger zur Halterung der Platten angeordnet ist, und mit einem Antrieb zur zweiachsigen Sonnennachführung, wobei der Ausleger an einem vertikalen, um seine senkrechte Achse drehbaren Gerüst befestigt ist. Die zweite Drehachse verläuft unterhalb des Auslegers horizontal sowie parallel zu jenem.

Die deutsche Auslegungsschrift DE 1 277 541 offenbart ein Verfahren und eine Vorrichtung zum Anbringen von Verkleidungsplatten an einer Rohbauwand, wobei die Platten durch Hintergießen von dünnflüssigem Mörtel in ihrer Lage gesichert werden. Dabei werden zunächst in einem Abstand vor der Wand über die ganze Fläche verteilt lotrechte Drähte gespannt und verankert, und dann werden die Verkleidungsplatten vor den Drähten aufgestellt und an diesen mit Abstandhaltern behelfsmäßig befestigt. Die eigentliche Fixierung erfolgt schließlich durch das anschließende Hintergießen mit Mörtel.

Aus den Nachteilen des beschriebenen Stands der Technik resultiert ein Bedürfnis nach einer Befestigungstechnik, mit deren Hilfe Solarmodule mit wenig Aufwand und doch sicher befestigt werden können, möglichst auch auf nicht extrem stark belastbaren Unterkonstruktionen wie Garagendächern, Carports od. dgl. Dabei wäre es wünschenswert, dass unter geringem konstruktiven Aufwand außerdem eine möglichst optimale Ausbeute der eingestrahlten Sonnenstrahlung erreichbar ist.

Zur Lösung dieses Problems sieht die Erfindung im Rahmen eines gattungsgemäßen Systems zur Festlegung flächiger Solarkomponenten an Punktfundamenten oder - verankerungen vor, dass
a) die Halteprofile einen wenigstens eine Aufnahmetasche aufweisenden Querschnitt haben mit wenigstens zwei Schenkeln und einem Schlitz zwischen den beiden Schenkeln, worin ein Solarmodul einschiebbar und festklemmbar ist, bspw. in der Form eines **U** oder **V,** oder mit zwei entgegengesetzt geöffneten Aufnahmetaschen, bspw. **H, N, X** oder **K,** wobei
b) wenigstens zwei Halteprofile einander zugekehrte Aufnahmetaschen aufweisen, so dass eine Solarkomponente mit je einer Kante in diese einschiebbar und/oder eingeschoben ist, und wobei
c) die Halteprofile durch an den Tragelementen festklemmbare Stütz-, Spann- und/oder Klemmelemente festlegbar sind, welche jeweils im Bereich ihres einen Endes ein Hakenelement aufweisen zum Einhängen an einem Tragelement, sowie im Bereich ihres gegenüberliegenden Endes jeweils ein Klemmelement zum Festklemmen an dem betreffenden Tragelement.

Die langgestreckten Tragelemente erlauben die Verbindung mehrerer Halteprofile für eine Mehrzahl von Solarelementen mit einigen wenigen Verankerungspunkten. Ferner können die Halteprofile in Längsrichtung der Tragelemente verschoben werden, um einerseits eine optimale Plazierung der Solarmodule zu ermöglichen. Darüber hinaus ist ein Zusammenfahren der Halteprofile bei eingelegtem Solarelement möglich, um dieses dazwischen einzuklemmen. Wenn eine beliebige Schrägstellung gewünscht wird, können zunächst zwischen jeweils zwei bspw. übereinander verlaufenden Tragelementen zunächst Quer-Tragelemente unter dem gewünschten Neigungswinkel verlegt werden, an denen dann die Halteprofile fixierbar sind. Werden zwei solcher, geneigt verlaufender Halteprofile gegeneinander versetzt, kann zusätzlich zu dem Neigungswinkel auch die Horizontalrichtung der Solarelemente bspw. optimal in Richtung Süden ausgerichtet werden. Durch die von zwei Schenkeln gebildete Öffnungsseite eines Halteprofils können Solarelemente unabhängig von deren Dicke und Breite gehalten werden. Die längs der Tragelemente verschiebbaren und sodann festlegbaren Spann- oder Klemmelemente erlauben eine Anpassung an unterschiedliche Längen der betreffenden Solarelemente. Somit können alle Arten von Solarelementen in optimaler Neigung und Süd-Ausrichtung an Punktfundamenten und/oder -verankerungen fixiert werden, ohne dass hierzu größere, handwerkliche Tätigkeiten erforderlich sind.

Die Verankerung der langgestreckten Tragelemente gelingt durch eine Anordnung mit
a) einem Ankerelement oder einer Verankerungseinrichtung, das/die an einem Bauwerk, bspw. Hauswand, Dachstuhl oder Mauer, oder an einem Fundament festgelegt oder festlegbar ist;
b) einem Ösen- oder Hakenelement zur Fixierung eines zu spannenden Seiles od. dgl., mit einem Schaft, der an dem Ankerelement oder einem Teil der Verankerungseinrichtung festlegbar ist; sowie
c) einem sowohl relativ gegenüber dem Ankerelement oder der Verankerungseinrichtung einerseits als auch gegenüber dem Ösen- oder Hakenelement andererseits bewegbaren Spannelement, um das Ösen- oder Hakenelement in einer definierten Richtung zu verschieben und damit ein daran befestigtes Stahlseil od. dgl. zu spannen.

Hier findet eine Integration von Verankerung und Spannvorrichtung statt, die sämtlichen gestellten Anforderungen gerecht wird. Die Spannvorrichtung umfaßt zwei zum Spannen des Seils gegeneinander verschiebbare Elemente, von denen eines gleichzeitig als Verankerungselement mit Befestigungselementen, bspw. Durchstecköffnungen für Schrauben, ausgebildet ist. Dadurch kann dieses Element mit einer Doppelfunktion unbedenklich mit einer ausreichenden Stärke ausgeführt sein, bspw. aus einem 5 mm oder noch stärkeren Stahlblechzuschnitt gebogen. Das demgegenüber verschiebbare Spannungselement trägt gleichzeitig die für die Seilverankerung erforderliche Öse bzw. Haken. und erfüllt demnach ebenfalls eine Doppelfunktion. Mit seinem rückwärtigen Schaft erfährt dieses Ösenelement eine Führung in der (durch Biegung gebildeten) Hülse des Verankerungselements. Durch die solchermaßen bereichsweise konzentrische Anordnung von Verankerungs- und Ösenelement ergibt sich ein sehr geringer Materialeinsatz. Das Gewindeelement schließlich enthält eine für die Betätigbarkeit der Spannvorrichtung wichtige Untersetzung in Form einer (sehr) flachen Gewindesteigung. Das Gewindeelement kann an seiner Außenseite mit einem Sechskant od. dgl. versehen sein, so dass es bequem mit einem Schraubenschlüssel erfaßt und rotiert werden kann, um das betreffende Seil zu spannen. Die von einer Drehbewegung abgeleitete Spannbewegung hat den weiteren Vorteil, dass durch Verwendung eines Schraubenschlüssels mit einem langen oder gar verlängerten Griff das zwecks Seilspannung aufzubringende Drehmoment weiter reduzierbar ist.

Ein Teil der Verankerungseinrichtung mag derart ausgebildet sein, dass daran sowohl ein Ösen- oder Hakenelement zur Fixierung eines zu spannenden Seiles od. dgl. festlegbar ist als auch ein der Verstellung der Bewegungsrichtung des Spannelements dienendes Teil. Dank einer solchen variablen Struktur kann die Gesamtanordnung bei Bedarf - wenn die gewünschte Seilspannrichtung von der dafür an der Verankerungseinrichtung ursprünglich vorgesehenen Richtung abweicht - durch Einfügen eines entsprechend angepaßten oder anpaßbaren Elements stets nach Süden ausgerichtet werden.

Es hat sich als günstig erwiesen, dass das der Verstellung der Bewegungsrichtung des Spannelements dienende Teil gegenüber der Verankerungseinrichtung um eine Achse schwenkbar ist. Mit höchstens zwei solchen, nacheinander geschalteten, zueinander etwa orthogonalen Schwenkeinrichtungen läßt sich stets genau die Richtung zu einer gegenüberliegenden Verankerungsreinrichtung finden bzw. einstellen.

Es liegt im Rahmen der Erfindung, dass die Schwenkachse quer, d.h. schräg oder vorzugsweise etwa rechtwinklig zu der Bewegungsrichtung des Spannelements orientiert ist. Hierbei kann es sich bspw. um eine etwa vertikale Achse handeln, so dass die Seilspannrichtung in einer etwa horizontalen Ebene verschwenkbar ist. Wenn die Schwenkachse dagegen horizontal verläuft, wird der Verlauf des Drahtseils od. dgl. in einer vertikalen Ebene verändert.

Die Erfindung empfiehlt, dass zwischen zwei zueinander etwa parallel verlaufenden, langgestreckten Elementen, insbesondere Stahlseilen, wenigstens ein stangenartiges Element festgelegt ist. Dadurch kann der gegenseitige Abstand zwischen den dran beteiligten Stahlseilen trotz deren Flexibilität konstant gehalten werden. Außerdem lassen sich die Module solchenfalls auch bei einer Schrägstellung gegenüber den Stahlseilen fest einklemmen.

Zwei Seile, zwischen denen wenigstens ein stangenartiges Element festgelegt ist, können in ihrer Längsrichtung gegeneinander verstellbar sein. Dadurch werden daran befestigte Stangen innerhalb der betreffenden, von den zueinander parallelen Seilen aufgespannten Ebene verstellt. Handelt es sich dabei um eine etwa vertikale Ebene, weil die beteiligten Seile übereinander verlaufen, so verstellt sich dabei der Neigungswinkel der stangenartigen Elemente, demzufolge auch der Neigungswinkel daran festgelegter Solarmodule.

Die Erfindung erlaubt eine Weiterbildung dahingehend, dass zwei zueinander etwa parallel verlaufende, langgestreckte Elemente, insbesondere Stahlseile, an der selben Verankerungseinrichtung befestigt sind. Dadurch kann der Konstruktionsaufwand auf ein Minimum reduziert werden.

Weitere Vorteile resultieren daraus, dass an einem Teil der Verankerungseinrichtung ein Bügel, insbesondere ein zweiarmiger Hebel, festgelegt oder festlegbar ist, der in Längsrichtung des Bügels gegeneinander versetzte Elemente zum Befestigen und/oder Spannen der daran zusammengeführten, langgestreckten Elemente, insbesondere Stahlseile, aufweist. Verläuft dieser Bügel parallel zu den an den selben Seilen befestigten, Solarmodule tragenden Stangen, so wird bei einer Neigungsverstellung des Bügels automatisch auch die Neigung aller an den betreffenden Seilen befestigten Solarmodule verändert.

Vorzugsweise ist der Bügel um eine Achse verschwenkbar, die quer zu seiner Längsrichtung verläuft. Bevorzugt wird dabei, dass die beiden Arme eines durch den Bügel gebildeten Hebels gegensinnig verschwenken. Eine solche Bewegung kann allein mittels Seilzug auf einen gleichartigen Bügel an der gegenüberliegenden Verankerungseinrichtung übertragen werden, so dass eine Betätigung an nur einer von zwei Verankerungseinrichtungen ausreichend für eine weitgehend spannungsfreie Verstellung beider beteiligter Spanndrähte ist.

Zur Spannung eines Seiles genügt im Grunde ein einziges, verstellbares Spannelement, während an dem gegenüberliegenden Seilende eine (unbewegliche, d.h. starre) Verankerungsmöglichkeit ausreichend ist, sofern mit der (einzigen) Spanneinrichtung eine ausreichende Verstellung möglich ist, um die angestrebte Seil-Zugkraft aufbringen zu können. Zur Lösung des sekundären Problems der Anzeige der aktuellen Seil-Zugkraft kann daher in die Zugkraftübertragungskette an beliebiger Stelle zwischen den beiden an einem Bauwerk, Fundament od. dgl. festgelegten Verankerungselementen ein Element zur Anzeige des aktuellen Seil-Zugkraftwertes eingeschalten sein. Hierfür eignen sich insbesondere Federelemente, da bei diesen die Auslenkung proportional zu der einwirkenden Kraft ist. An dem Grad der Auslenkung läßt sich daher die aktuelle Seil-Zugkraft ablesen. Natürlich könnte ein derartiges Zugkraft-Anzeigeelement auch im Bereich eines Seilendes ohne Verstellmöglichkeit oder gar innerhalb des (solchenfalls aufgeteilten) Seils angeordnet sein, dies ist jedoch unpraktisch, da in diesem Fall die einstellende Person den aktuellen Spannungszustand nicht selbst ablesen kann und daher stets zwei Personen für eine entsprechende Einstellung erforderlich sind. Das Zugkraft-Anzeigeelement ist daher bevorzugt im Bereich eines verstellbaren Seil-Spannungselements angeordnet. Hier bietet sich der Raum zwischen dem Ankerelement einerseits und einem mit diesem zusammenwirkenden Haken- und Ösenelement andererseits an, da bei der erfindungsgemäßen Anordnung in diesem Bereich die Seil-Zugkraft in eine zwischen den beiden Elementen wirkende Druckkraft umgewandelt wird. Somit kann eine Druckfeder mit einer hinreichend großen Steifigkeit verwendet werden, deren Kompressionszustand ein Maß für die aktuelle Seil-Zugspannung ist. Durch Anlegen eines in Millimeter geeichten Maßstabs an ein derartige · (Druck-) Federelement kann daher über einen die Federkonstante berücksichtigenden Multiplikationsfaktor die Seil-Zugkraft berechnet werden. Natürlich könnte auch ein (Zug-) Federelement zwischen Haken- oder Ösenelement und Seil eingehängt werden.

Es hat sich als günstig erwiesen, dass die Schenkel eines Halteprofils von ihrer gemeinsamen Kante oder einem rückwärtigen Verbindungssteg in Richtung auf ihre freie Öffnungskante divergieren, bspw. in einem Winkel von 30° bis 60°, so dass sich der von diesen Schenkeln eingeschlossene Schlitz zu seinem Boden hin verjüngt. Hiermit ist eine Anpassungsmöglichkeit auch an unterschiedliche Stärken der Solarelemente gegeben, indem dieselben je nach ihrer Stärke weiter oder weniger tief in den durch die betreffenden Schenkel gebildeten Schlitz einschiebbar sind.

Es liegt im Rahmen der Erfindung, dass der von zwei Schenkeln eingeschlossene Schlitz eines Halteprofils durch einen elastischen Werkstoff, insbesondere eine wetterfesten Schaumstoff, ausgekleidet ist. Dieser Werkstoff schützt einerseits die Solarmodule bei der Montage und sorgt anschließend für einen festen, spielfreien Sitz des betreffenden Elements.

Erfindungsgemäß ist weiterhin vorgesehen, dass an einem Halteprofil vorzugsweise an einer freien Längskante wenigstens ein Steg zum Festlegen an einem oder mehreren Spann- oder Klemmelementen vorgesehen ist. Somit ist eine Verankerung durch Formschluß möglich, wodurch ein hohes Maß an Sicherheit gewährleistet ist.

Die Erfindung zeichnet sich ferner aus durch zwei Befestigungsstege pro Halteprofil, die vorzugsweise in einer gemeinsamen Ebene verlaufen, sich jedoch in entgegengesetzten Richtungen erstrecken. Durch Umgreifen zweier derartiger Stege ist eine unlösbare Verbindung geschaffen, wobei dennoch ein Aufschieben eines Spann- oder Klemmelements auf ein Halteprofil von dessen Stirnseite her jederzeit möglich ist.

Die Erfindung läßt sich dahingehend weiterbilden, dass ein Halteprofil Ausnehmungen zum Ein- oder Hindurchführen eines Spann- oder Klemmelements oder eines Tragelements aufweist. Es handelt sich hierbei um eine Alternative, bei der zwar ein stirnseitiges Aufschieben nicht mehr möglich ist, wobei jedoch ein Lösen nahezu unmöglich ist, insbesondere dann, wenn die Ausnehmungen einen ösenförmig geschlossenen Rand aufweisen.

Weitere Vorzüge ergeben sich dadurch, dass die Spann- oder Klemmelemente vorzugsweise umgebogene Laschen zum Umgreifen von Befestigungsstegen oder zum Eingreifen in Befestigungsausnehmungen eines Halteprofils aufweisen. Derartige Laschen können leicht aus einem ebenen Zuschnitt gebogen werden. Dadurch ist es möglich, ein Spann- oder Klemmelement aus einem Blech bspw. aus einem rostfreien oder verzinkten bzw. verzinkbaren Stahl oder Eisen mit einfachsten Mitteln wie Ausstanzen und anschließendem Biegen herzustellen. Die Biegekanten können hierbei wahlweise in Richtung der Halteprofile oder in Richtung der Tragelemente verlaufen.

Die Erfindung erfährt eine vorteilhafte Ausgestaltung dadurch, dass an einem Spann- oder Klemmelement wenigstens zwei in etwa entgegengesetzten Richtungen weisende, bspw. umgebogene Befestigungslaschen vorgesehen sind. Diese Laschen korrespondieren mit in entgegengesetzten Richtungen weisenden Befestigungsstegen eines Halteprofils und erlauben eine unlösbare Verbindung zwischen diesen Elementen.

Ein weiteres, erfindungsgemäßes Merkmal liegt darin, dass an einem Spann- oder Klemmelement wenigstens ein Element zum Umgreifen eines Tragelements vorgesehen ist. Auch bei der Schnittstelle zwischen Tragelement und Spann- oder Klemmelement bringt ein Formschluß ein hohes Maß an Sicherheit.

Es hat sich bewährt, dass das Element zum Umgreifen eines Tragelements einen haken- oder ösenartigen Zuschnitt aufweist. Ein hakenartiger Zuschnitt hat den Vorteil, dass das Spann- oder Klemmelement nach Installation des Tragelements aufsteckbar ist.

Eine vorteilhafte Anordnung läßt sich dadurch finden, dass an einem Spann- oder Klemmelement wenigstens eine an einem Tragelement form- und/oder reibschlüssig festlegbare Vorrichtung vorgesehen ist. Diese Vorrichtung dient der unverrückbaren Arretierung des Spann- oder Klemmelements an dem Tragelement nach Heranschieben desselben zusammen mit dem aufgesteckten Halteprofil an ein eingelegtes Solarmodul.

Die Erfindung bietet ferner die Möglichkeit, dass die an einem Tragelement form- und/oder reibschlüssig festlegbare Vorrichtung durch ein bügelförmiges Element mit einer U- oder hakenförmigen Gestalt gebildet ist, das durch eine oder mehrere Öffnungen des Spann- oder Klemmelements hindurchsteckbar ist. Ein U-Bügel umgreift zusammen mit dem Spann- oder Klemmelement ein Tragelement vollständig und kann sich daher versehentlich unter keinen Umständen lösen.

Eine weitere Optimierung läßt sich dadurch erreichen, dass das bügelförmige Element mittels einem ein Gewinde an seinen Durchsteckenden umgreifenden Schraubelement festziehbar ist. Hierbei lassen sich mit einfachsten Werkzeugen extrem hohe Arretierungskräfte erzielen.

Vorzugsweise ist das Spann- oder Klemmelement derart ausgebildet, dass gleichzeitig mit der bspw. reibschlüssigen Arretierung des Spann- oder Klemmelements an einem Tragelement auch eine unverrückbare, insbesondere reibschlüssige Arretierung gegenüber dem Halteprofil erfolgt. Solchenfalls kann im Idealfall bspw. durch Anziehen einer einzigen Schraube die gesamte Verbindung von dem Halteprofil über das Spann- oder Klemmelement bis hin zu dem Tragelement hergestellt werden. Vorzugsweise ist die Verbindung zu dem Halteprofil durch ein dieses teilweise übergreifendes Element bewerkstelligt, das bspw. elastisch gegen das Tragelement preßbar ist, vorzugsweise unter dem Einfluß einer Spannschraube. Diese Anpreßkraft wird wiederum von einem gegenüberliegenden Bereich des Spann- oder Klemmelements aufgenommen.

Der Erfindungsgedanke erlaubt eine Weiterbildung dahingehend, dass an einem Tragelement zwischen je zwei festgelegten Spann- oder Klemmelementen je ein elastisches Abstützeelement, bspw. aus einem wetterfesten Schaumstoff, aufgeschoben ist. Dieses kann bei Verlegung der Tragelemente längs einer Wand, Mauer oder eines Dachs zu einer stabilen Lage der Solarmodule beitragen, so dass die Verwendung von vorzugsweise metallischen Spanndrähten als Tragelement möglich ist. Die Elastizität der Abstützelemente sollte derart gewählt sein, dass einerseits ein weicher Kontakt mit der betreffenden Fläche gewährleistet ist, damit bspw. Dachziegel nicht beschädigt werden können. Andererseits soll bereits eine kleine Verformung zu einer erheblichen Rückstellkraft führen, damit die Spann- oder Klemmelemente wie auch die Halteprofile und insbesondere die Solarmodule selbst nicht an der betreffenden Fläche anschlagen können.

Die Erfindung läßt sich dadurch ergänzen, dass das Abstützelement eine langgestreckte, hohlzylindrische Gestalt aufweist, in deren Innenraum ein langgestrecktes Tragelement eingelegt ist. Diese Gestalt sorgt für eine große Kontaktfläche mit der betreffenden Fläche, woraus eine hohe Rückstellkraft resultiert.

Zur Perfektionierung der erfindungsgemäßen Konstruktion kann vorgesehen sein, dass das hohlzylindrische Abstützelement einen radialen Längsschlitz aufweist, durch den das Tragelement hindurchtreten kann. Dadurch gestaltet sich die Montage eines derartigen Abstützelements als äußerst einfach: Es wird einfach auf die gewünschte Länge zurechtgeschnitten und sodann über das Tragelement geschoben.

Schließlich entspricht es der Lehre der Erfindung, dass der radiale Längsschlitz die Längsachse des hohlzylindrischen Elements längs einer Schraubenlinie umläuft. Diese Schlitzgeometrie verhindert, dass sich das Abstützelement versehentlich von dem Tragelement lösen könnte.

Weitere Merkmale, Einzelheiten, Vorteile und Wirkungen ergeben sich aus der folgenden Beschreibung bevorzugter Ausführungsbeispiele der Erfindung sowie anhand der Zeichnung. Hierbei zeigt:
- Fig. 1: eine Seitenansicht einer erfindungsgemäßen Fixierungsvorrichtung;
- Fig. 2: einen Schnitt durch die Fig. 1 entlang der Linie III;
- Fig. 3: eine der Fig. 1 entsprechende Darstellung einer abgewandelten Ausführungsform einer Fixierungsvorrichtung;
- Fig. 4: ein Spannelement der Fixierungseinrichtung aus einer der vorhergehenden Fig;
- Fig. 5: eine Seitenansicht auf ein Tragelement und ein darauf appliziertes Spann- oder Klemmelement bei eingesetztem Halteprofil, etwa in Richtung des Pfeils V aus Fig. 6;
- Fig. 6: eine Draufsicht auf die Fig. 5;
- Fig. 7: eine andere Ausführungsform der Erfindung in einer der Fig. 5 entsprechenden Darstellung;

- Fig. 8: eine Draufsicht auf die Fig. 7; sowie
- Fig. 9: eine perspektivische Ansicht einer weiteren Ausführungsform der Erfindung.

Das erfindungsgemäße Fixierungselement 1 umfaßt das an einem Fundament od. dgl. fixierbare Verankerungsteil 2 sowie ein überwiegend langgestrecktes Ösenteil 3. Das Verankerungsteil 2 besteht aus dem eigentlichen Befestigungsteil 4 und einem lösbar daran festgelegten Kopfteil 5. Das Kopfteil 5 kann bspw. aus zwei rechteckigen, langgestreckten, zueinander parallelen, voneinander beabstandeten Platten bestehen, die zu beiden Seiten des Befestigungsteils 4 angeschraubt sind. Zu diesem Zweck haben das Befestigungsteil 4 und das Kopfteil 5 (Platten) jeweils etwa deckungsgleiche, vorzugsweise quadratische Laschen zur gegenseitigen Verbindung mittels durch miteinander fluchtende Bohrungen beider Laschen durchgeifender Schrauben 6. Natürlich kann bei einer anderen Ausführungsform das Verankerungsteil 2 auch insgesamt einstückig ausgeführt sein.

Die Grundfläche des Verankerungsteils 2 läßt sich näherungsweise als **L** charakterisieren. Ein Schenkel 7 des **L** erhält durch ein bspw. flach und mittig angeschweißtes Flacheisen ein **T**-Profil und ist dadurch gegenüber Verbiegungen auch bei hohen Belastungen unempfindlich.

Die beiden Platten des anderen Schenkels 8, d.h., des Kopfteils 5, sind an beiden Stirnseiten (oben und unten) unter Einfügung je eines Abstandselements miteinander verbunden und dadurch versteift. Durch in regelmäßigen Abständen übereinander angeordnete, in beiden Platten jeweils miteinander fluchtende Bohrungen können Schrauben oder Bolzen gesteckt werden und geben sodann je einen Zwischenraum zum Hindurchstecken des Schaftes 14 des Ösenteils 3 frei. Damit ist die Spannrichtung und somit auch die Richtung der aufzunehmenden Zugkraft definiert und weist in Richtung des T-profilierten Schenkels 7.

Der T-Profil-Schenkel 7 kann an seinem Mittelsteg 12 Befestigungsbohrungen aufweisen sowie auch - möglichst symmetrisch dazu - an dem längs aufgeschweißten Versteifungs-Flacheisen 13. Während mit ersteren eine Befestigung an einer Seite eines Dachsparrens möglich ist, wobei das Versteifungs-Flacheisen 13 den betreffenden Dachsparren zusätzlich untergreift, dienen letztere zum Festschrauben an einer Hauswand od. dgl. Hierbei wird jedoch bevorzugt das Ösenelement 3 um 180° gedreht von der anderen Stirnseite her in die Führungshülse 9 eingesteckt, so dass sich eine günstigere Statik ergibt.

Eine Ausnehmung 11 in der Innenseite des T-Profil-Schenkels 7 ist in der Lage, bei Montage an einem Dachsparren eine evtl. vorhandene Dachrinne zu unter- bzw. umgreifen, und verleiht der Grundfläche des Fixierungselements 1 eine näherungsweise U-förmige Gestalt.

Die Aufteilung des Verankerungsteils 2 in zwei Teile 7, 8 erlaubt es auch, den Schenkel 8 bspw. mit einer bspw. vertikal in den Boden in Form eines Punktfundaments einzementierten, bspw. ebenfalls T-profilierten Schiene zu verbinden. Dadurch kann auch ohne bereits vorhandenem Bauwerk mit einfachsten Mitteln eine Verankerung eines Seils od. dgl. erfolgen. Zur weiteren Vereinfachung kann auch an einer derartigen Schiene ein ringförmiges Element direkt angeformt sein.

An dem rückwärtigen Ende des Schafts 14 des Ösenteils 3, der mindestens etwa doppelt so lang ist wie die Breite der Platten des Kopfteils 5, ist ein Außengewinde vorhanden, auf welches zwei Gewindeelemente 16 mit Außensechskant aufgeschraubt sind, die sich gegenseitig kontern können. Da der Außendurchmesser des Schafts 14 etwa dem Abstand der Platten des Kopfteils 5 entspricht, ist der Außenumfang eines aufgeschraubten Gewindeelements 16 deutlich größer als der Freiraum zwischen den Platten des Kopfteils 5 - das Gewindeelement 16 stützt sich auf den rückwärtigen Längsseiten der Platten des Kopfteils 5 ab. Diese Kraft wird bei Drehung des vorderen Gewindeelements 16 gegenüber dem Ösenteil 3 auf letzteres übertragen und von diesem einem eingehängten Spannseil 15 mitgeteilt.

Anstelle einer Öse 10 kann zum Einhängen des Spannseils 15 auch ein Haken, ein U-förmiges Teil od. dgl. vorgesehen sein.

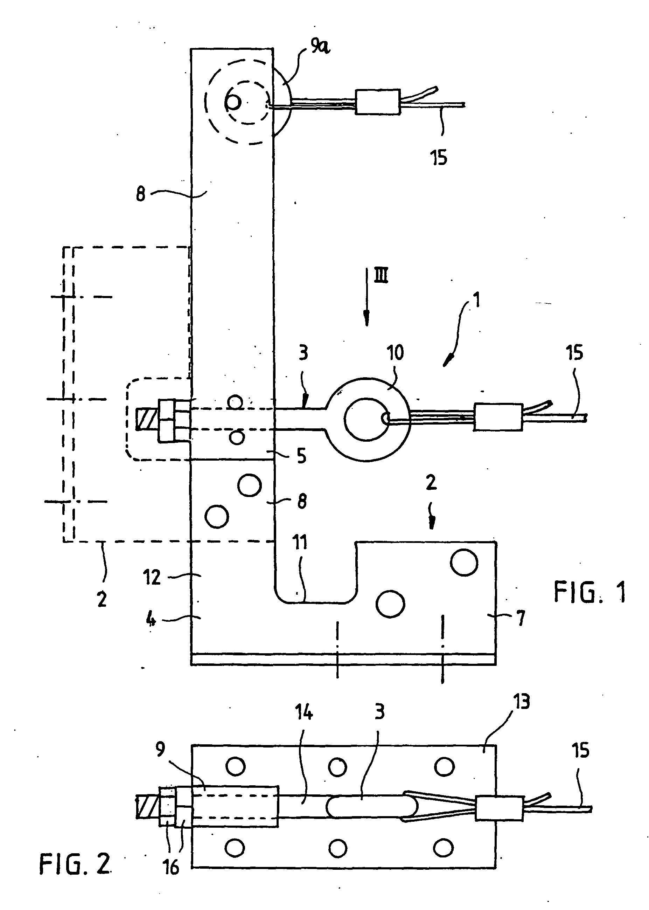

Wie man der Fig. 1 entnehmen kann, läßt sich das Befestigungsteil 4 von dem Kopfteil 5 lösen und in um 90° verdrehter Position wieder festlegen. Hierbei gelangt die Dachrinnenausnehmung 11 in den Bereich hinter den Gewindeelementen 16 und behindert deren Verdrehung mittels eines Schraubenschlüssels nicht. Diese Konfiguration eignet sich besonders für die Verankerung und Spannung eines Stahlseils 15 an der Oberseite eines von einem Mäuerchen umlaufenen Betonflachdachs, indem die Seile 15 solchenfalls von Mäuerchen zu Mäuerchen gespannt werden. Das Stahlseil 15 wird durch die Öse 10 gefädelt und sodann an sich selbst festgelegt, insbesondere festgeklemmt.

Da die Länge des mit Gewinde versehen Schaftbereichs 14 des Ösenteils 3 wie auch die Tiefe der Dachrinnenausnehmung 11 ggf. 1 bis 5 cm, vorzugsweise 2 bis 4 cm betragen können, steht ein großer Spielraum für eine Seilspannung zur Verfügung.

Da die Platten 5 übereinander bzw. in ihrer Längsrichtung hintereinander mehrere Bohrungen aufweisen, können an einem Verankerungsteil 2 mehrere Ösenteile 3 und damit auch mehrere, insbesondere 2 Seile in paralleler Ausrichtung, aber mit einem gegenseitigen Abstand von bspw. 50 cm, festgelegt werden.

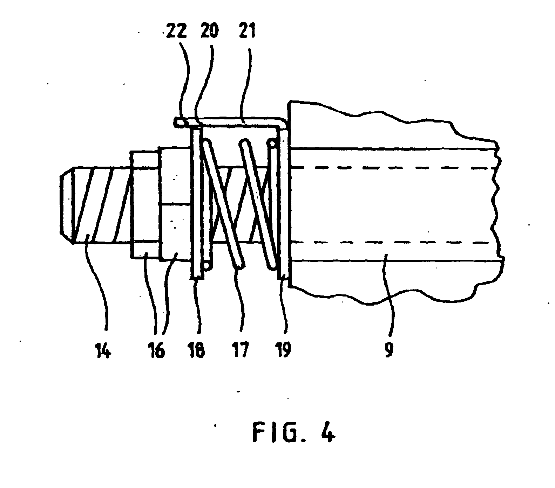

In Fig. 4 ist zu erkennen, dass zwischen der dem Seil 15 abgwandten Stirnseite der Führungshülse 9 und den der Arretierung dienenden Gewindeelementen 16 eine Druckfeder 17, bspw. eine Spiralfeder, eingesetzt sein kann, die den Schaft 14 des Ösenteils 3 umgibt und dadurch geführt ist. Die Druckfeder 17 kann zwischen zwei Ringscheiben 18, 19 eingespannt sein, welche die Federkraft auf die gegeneinander beweglichen Teile 2, 3 ableitet. Die mit Spannung des Seils 15 erhöhte Zugkraft führt zu einer Kompression der Druckfeder 17, deren Länge gemessen werden kann, um die Seil-Zugkraft mit ausreichender Genauigkeit bestimmen zu können. Um Rechenfehler zu vermeiden, kann an einem Montageelement ein bezügl. der Auslenkkraft der Feder 17 in Kilopond kp, Newton N, Tonnen t od. dgl. geeichter Maßstab und/oder eine Markierung 20 angebracht sein, insbesondere an einem zu dem Schaft 14 parallelen Fortsatz 21. Hierfür bietet sich insbesondere eine Ringscheibe 18, 19 an, da der Abstand zwischen den beiden Scheiben 18, 19 der aktuellen Federlänge 17 und damit der Seil-Zugkraft entspricht. Der Nullpunkt 22 eines derartigen Maßstabs kann daher in einem festen (zu der Achse 14 parallelen) Abstand von der Ebene der betreffenden (mit dem Fortsatz 21 versehenen) Scheibe 18, 19 angeordnet sein, welcher der (unkomprimierten) Länge der Feder 17 entspricht. Abgelesen wird dieser Maßstab anhand der Relativstellung der jeweils anderen Ringscheibe 19, 18.

Eine vorteilhafte Eigenschaft des Verankerungsteils 2 ist, dass dieses ohne Ösenteil 3 zur Verankerung von stangenartigen Tragelementen verwendbar ist, sofern eine besonders hohe Stabilität der Tragkonstruktion gefordert wird.

Wie im oberen Bereich von Fig. 1 zu erkennen, können außerdem an den quer durch den Schenkel 8 bzw. die beiden Platten 5 gesteckten Schrauben oder Stifte auch Ringe 9a festgelegt sein, an denen je ein Seil 15 wie an dem Ösenteil 3 befestigt werden kann. Das Seil 15 kann auch direkt um diese Schrauben oder Stifte geschlungen werden.

Weitere Modifikationen sind denkbar. So kann der im Beispiel T-profilierte Schenkel 7 anstelle durch ein angeschweißtes Flacheisen 13 auch durch ein angeschweißtes Rohr versteift sein. Das Verankerungsteil 2 kann mit in eine Wand einzementierbaren Fahnen, Laschen od. dgl. realisiert sein, etc.

Gespannte Seile 15 können unter beliebigen Neigungswinkeln verlaufen, um eine Ausrichtung der Solarpaneele nach Süden zu ermöglichen. Dazu können die Verankerungselemente 2 entsprechend schräg einzementiert werden, und/oder die Seile 14 werden über Umlenkelemente, insbesondere Rollen, geführt, die an den Fundamenten für die Verankerungselemente 2 oder an eigenen Fundamenten befestigt bzw. gelagert sein können.

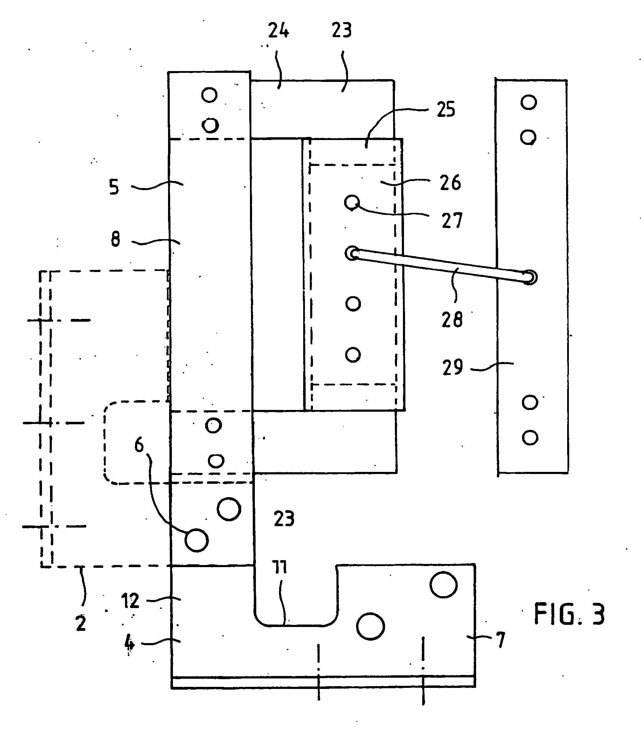

Eine andere Möglichkeit zur Schrägausrichtung der Zugrichtung zeigt die Fig. 3. Dort wird ein Verankerungsteil 2 verwendet, allerdings ohne direkte Verbindung mit einem oder mehreren Ösenteilen. Statt dessen wird in der Nähe der beiden Stirnseiten des Schenkels 8 zwischen den Platten 5 je eine etwa haken-, L- oder winkelförmige Platte 23 befestigt, insbesondere eingeklemmt und fetgeschraubt, derart, daß je ein Schenkel 24 dieser Platten 23 in die selbe Richtung gegenüber dem Kopfteil 5 übersteht und etwa lotrecht zu dem Schenkel 8 verläuft; die jeweils anderen Schenkel 25 weisen aufeinander zu. Über diese aufeinander zu weisenden Schenkel 25 wird sodann ein Rohr 26 gesteckt, dessen Innendurchmesser etwa der zu ihrer Grundebene parallelen Breite der aufeinander zu weisenden Schenkel 25 entspricht. Die Länge des Metall-Rohrs 26 entspricht dem Abstand zwischen den zueinander parallelen Schenkeln 24 der L-förmigen Platten 23, so dass das Rohr 26 formschlüssig an den Platten 23 fixiert ist, sich jedoch um seine Längsachse drehen kann. In dem Rohr 26 sind diametral hindurchgehende Bohrungen 27 vorgesehen, durch die ein oder mehrere Ösenteile 3 hindurchgesteckt werden können. Diese können an der Rückseite des Rohrs durch Geweindeelemente in der aus obigen Ausführungen bekannten Weise gesichert sein und in ihrer Längsrichtung verschoben werden, um ein daran befestigtes Seil zu spannen. Auch in diesem Fall können zwei oder noch mehr Seile 15 an einem Rohr 26 und damit an einem Verankerungsteil 2 fixiert werden.

Sowohl an dem Rohr 26 als auch - wie bei der Anordnung nach Fig. 1 - an den Platten 5 direkt können anstelle von Ösenelemente 3 Bügel 28 od. dgl. verankert sein, insbesondere durch die Bohrungen 27 hindurchgesteckt.

An dem freien Ende eines solchen Bügels 28 kann dann der Mittelteil eines zweiarmigen Hebels 29 drehbar festgelegt sein, sie Fig. 3 erkennen läßt. Dieser Hebel 29 kann mit den selben oder ähnlichen Platten 5 aufgebaut sein wie der vertikale Schenkel 8 des Verankerungsteils 2. So lassen sich an Bohrungen des Hebels 29 ggf. Querstifte verankern, um daran oder zwischen diesen Ösenelemente 3, Ringe od. dgl. festzulegen und damit Seile 15 zu spannen.

Vorzugsweise werden jeweils zwei Seile 15 pro Hebel 29 gespannt, eines zu jeder Seite des Bügels 28. Werden beide Seile 15 mit ihren beiden Enden an solchen mit verschwenkbaren Hebeln 29 ausgestatteten Verankerungselementen 2 festgelegt und sodann derart gespannt, dass die beiden Hebel 29 parallel zueinander verlaufen, so verschwenken immer beide Hebel 29 gleichzeitig, wobei sich die Seile 15 in ihrer Längsrichtung gegeneinander verschieben.

Dadurch können alle an diesen Seilen 15 (und ggf. zwei weiteren, daneben angeordneten Seilen 15) befestigten Solarmodule gleichzeitig um eine horizontale Achse gekippt werden, um dem jahreszeitlich bedingt schwankenden Höchststand der Sonne nachgeführt zu werden. Diese Kippbewegung braucht nur an einem der beiden Hebel 29 ausgeübt zu werden, bspw. mittels einer verdrehbaren Gewindestange, die mit dem Bügel 29 gekoppelt ist, und mit einem darauf aufgeschraubten Gewindeelement, das entweder an dem Rohr 26 oder - falls ein solches nicht vorhanden ist - an dem Kopfteil 5 verankert sein kann. Die Ankopplung von Gewindestange und -ring kann auch vertauscht sein.

Sämtliche Teile können aus rostfreiem Edelstahl gefertigt und/oder verzinkt sein.

Anstelle von Drahtseilen 15 können auch Stangen mit vorzugsweise kreisförmigem oder regulär-vieleckigem Querschnitt oder (Rund-)Rohre jeweils mit einem nach der zu überbrückenden Länge variablen Durchmesser in dem Bereich von bspw. 1 bis 2 cm verwendet werden. Die zu überbrückende Länge kann dabei etwa zwischen 2 und 5 m variieren; bspw. sollte eine Garagendachfläche 102 ohne zusätzliche Stützstellen belegbar sein.

Im Rahmen eines ersten Systems 101 sind an insgesamt wenigstens zwei Tragelementen 15 wenigstens zwei Halteprofile 103 mittels je zwei Spann- oder Klemmelementen 104 festgelegt. Die Halteprofile 103 haben etwa einen I-förmigen Querschnitt. Dieser kann aus zwei identischen U-Profilen 105 zusammengefügt bspw. zusammengeschweißt 106 sein.

Ein U-Profil 105 hat einen Mittelsteg 107 und zwei Schenkel 108, 109. Der obere Schenkel 108 schließt zusammen mit dem Mittelsteg 107 einen etwa rechten Winkel ein, während der untere Schenkel 109 von dem Mittelsteg 107 in Richtung auf seine freie Kante 110 nach abwärts divergiert, bspw. in einem Winkel von 45°. Dadurch ist es möglich, ein Solarmodul 111 unabhängig von dessen Stärke in den Schlitz zwischen den beiden Schenkeln 108, 109 einzuschieben und darin festzuklemmen.

Damit hierbei das Solarmodul 111 nicht beschädigt wird, ist der durch den Mittelsteg 107 und die beiden Schenkel 108, 109 gebildete Schlitz durch einen wetterfesten Gummi- oder Schaumstoffstreifen 112 od. dgl. ausgekleidet.

Ferner ist der untere Schenkel 109 im Bereich seiner freien Kante parallel zu dem oberen Schenkel 108 umgebogen, wodurch ein Befestigungssteg 113 gebildet wird, der über den wetterfesten Gummi- oder Schaumstoffstreifen 112 hinausragt.

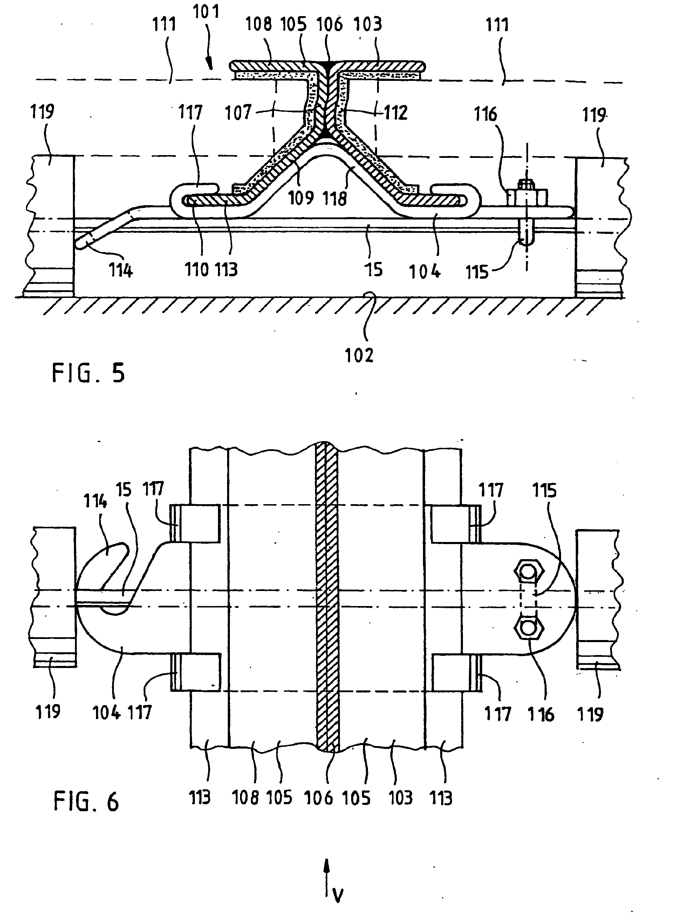

Wie man der Fig. 5 entnehmen kann, ergibt sich durch das spiegelbildliche Aneinanderfügen zweier U-Profile 105 ein Halteprofil 103 mit K-Querschnitt.

Zur Verbindung eines Halteprofils 103 mit einem Tragelement 15 dient ein Spann- oder Klemmelement 104. Dieses ist aus einem länglichen Blechzuschnitt gebildet, das an einer Schmalseite einen hakenartigen Ansatz 114 zum Einhängen an einem Tragelement 15 und an der gegenüberliegenden Schmalseite zwei Durchstecköffnungen für die Enden eines U-förmigen Arretierungsbügels 115 aufweist. Die Enden dieses das Tragelement 15 untergreifenden Bügels 115 sind mit einem Gewinde versehen, auf das je ein Innengewindeelement 116 aufschraubbar ist, um das Tragelement 1 mittels des Bügels 115 an die Unterseite des Spann- oder Klemmelements 104 heranzuziehen und dort reibschlüssig festzulegen.

An den beiden Längsseiten des Spann- oder Klemmelements befinden sich je zwei Befestigungslaschen 117, die nach oben und sodann aufeinander zu umgebogen und dadurch in der Lage sind, je einen Befestigungssteg 113 des Halteprofils 103 zu umgreifen.

Das Spann- oder Klemmelement 104 ist in seinem mittleren Bereich mit einer etwa dachförmigen Hochwölbung 118 versehen, die mit den nicht verkleideten Außenseiten eines Halteprofils 103 korrespondiert, derart, dass der divergierende Bereich je eines der unteren Schenkel 109 an je einer Dachfläche der Hochwölbung 118 anliegt.

Dadurch können einerseits beim Anpressen des Halteprofils 103 gegen ein Solarmodul 111 die Abstützkräfte direkt von dessen unterem Schenkel 109 auf das Spann- oder Klemmelement 104 übertragen werden. Andererseits bildet die Hochwölbung 118 einen natürlichen Biegebereich, und beim Arretieren des Bügels 115 mit den Gewindeelementen 116 kann sich das an dem Haken 114 von dem Tragelement 15 untergriffene Spann- oder Klemmelement 104 im Bereich der Hochwölbung geringfügig zusammenbiegen. Dadurch wird das zunächst in Längsrichtung des Halteprofils 103 verschiebbare Spann- oder Klemmelement 104 gegenüber den beiden unteren Schenkeln 109 des Halteprofils 103 verspannt, so dass dieses nun unverrückbar festgelegt ist.

Zur Montage werden zunächst die Spann- oder Klemmelemente 104 in der gewünschten Anzahl auf ein Halteprofil 103 aufgeschoben und sodann mit ihren Häken 114 an je einem Tragelement 15 eingehängt. Sodann werden die Bügel 115 eingesetzt und mit den Gewinedeelementen 116 gesichert, wobei das Spann- oder Klemmelement 104 jedoch noch längs des Tragelements 15 verschiebbar ist.

Hohlzylindrische Abstützelemente 119 werden auf den Abstand zwischen zwei Spann- oder Klemmelementen 104 zurechtgeschnitten und mittels mantelseitiger Schlitze auf die Tragelemente 15 aufgesteckt.

Anschließend werden Solarmodule 111 an einem zuvor installierten Halteprofil 103 angesetzt und das jüngste Halteprofil 103 wird auf dieses aufgeschoben. Unter festem Zusammenpressen der Halteprofile 103 werden sodann die Gewindeelemente 116 festgezogen.

Vorzugsweise werden immer zwei Reihen von Solarmodulen 111 mit einem gemeinsamen Halteprofil 103 zu einer Einheit verbunden, während zu der nächsten Doppelreihe ein Abstand gelassen wird. Dadurch muß zum Austausch eines Solarmoduls 111 jeweils nur ein Halteprofil 103 gelöst und von der betreffenden Reihe entfernt werden. Aus demselben Grund sollte die Länge der Halteprofile 103 nicht viel größer als die Breite von zwei bis drei Solarmodulen 111 gewählt werden, damit beim Lösen eines Halteprofils 3 nur wenige Solarmodule 111 gelockert werden.

Es sind eine Reihe von Modifikationen möglich. Bspw. können die Tragelemente 15 in Ausnehmungen der Halteelemente 103 und/oder der Spann- oder Klemmelemente 104. eingelegt sein, um durch einen direkten Formschluß ein Höchstmaß an Sicherheit zu gewährleisten.

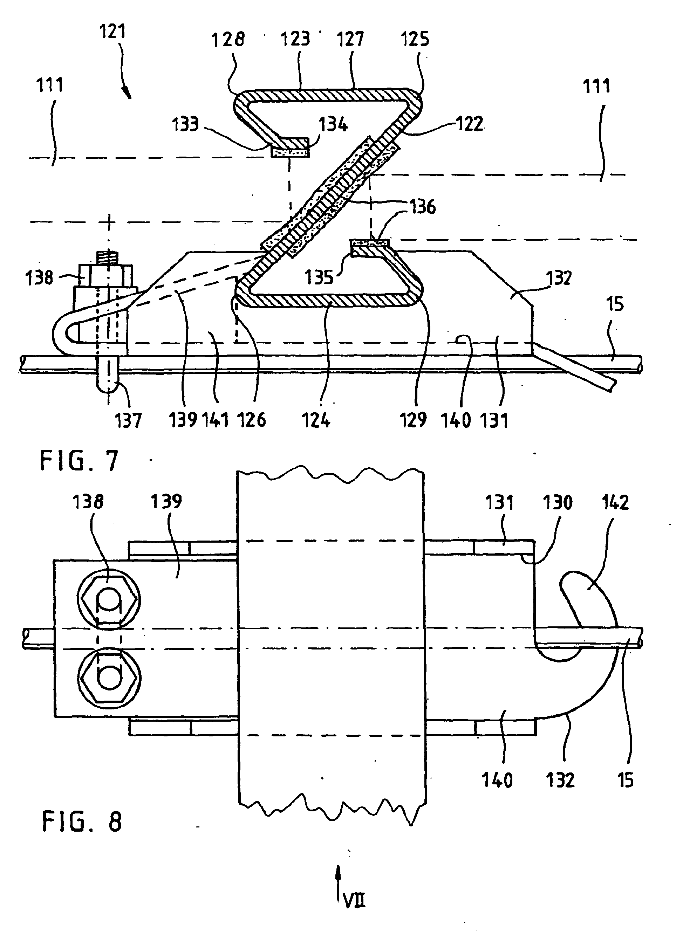

Bei der Ausführungsform 121 nach den Fig. 7 und 8 wurde Wert auf eine besonders energiesparende Herstellung gelegt, damit die Gesamtbilanz der einzusetzenden und erzeugbaren Energie möglichst günstig ausfällt. Die einzelnen Elemente sind deshalb so gestaltet, dass sie ohne jeglichen Schweißvorgang hergestellt werden können. Erforderlich sind ausschließlich Stanz- und Biegeschritte. Dies wird dadurch erreicht, dass der Verbindungssteg 122 zwischen den oberen und unteren Schenkeln 123, 124 geneigt zwischen einander diametral gegenüberliegenden Kanten 125, 126 dieser Schenkel 123, 124 verläuft. Das Profil 127 erhält dadurch einen Z-förmigen Querschnitt, der sich unschwer bspw. aus einem Flacheisen biegen läßt.

Gleichzeitig sind die nicht an den Verbindungssteg 122 grenzenden Kanten 128, 129 des Profils 127 abermals umgebogen, und zwar aufeinander zu, so dass sich zusammen mit seitlich um zu dem Seil 15 parallele Kanten 130 hochgebogenen und hinterschnitten konturierten Seitenschenkeln 131 des Spann- oder Klemmelements 132 ein Formschluß nach Art eines Schwalbenschwanzes ausbilden läßt. Damit die Solarpaneele nicht auf kantenförmigen Endbereichen des Halteprofils 127 aufsitzen, sind diese Endbereiche 133 abermals nach innen umgebogen, und zwar vorzugsweise parallel zu den oberen und unteren Schenkeln 123, 124 des Profils 127. Somit ergeben sich flächige Abstützungsbereiche 134, 135 für die Solarpaneele 111. Diese Abstützungsbereiche 134, 135 sind wie auch der Verbindungssteg 122 durch aufgeklebte Streifen 136 eines Schaumstoffs oder sonstigen Elastomers gepolstert.

Eine weitere Besonderheit der Ausführungsform 121 ist der Arretierungsmechanismus. Wie bei der ersten Ausführungsform besteht dieser aus einem hakenförmigen Element 142 an einem Ende des Spann- oder Klemmelements 132 einerseits sowie aus einem U-förmigen, das Seil 15 untergreifenden Bügel 137 andererseits. Im Gegensatz zu der Anordnung nach den Fig. 5 und 6 werden auf die mit Gewinde versehenen Enden des Bügels 137 aufgeschraubte Innengewindeelemente 138 nicht direkt gegen die Oberseite des aus einem stabilen Blech gebogenen Spann- oder Klemmelements 132 festgezogen. Vielmehr befindet sich dazwischen noch ein weiteres, in sich steifes Element 139, das eine untere Kante 126 des Halteprofils 127, vorzugsweise im Bereich des Verbindungsstegs 122, übergreift. Mit seinem gegenüberliegenden Ende stützt sich das steife Element 39 an der Grundfläche des Spann- oder Klemmelements 132 ab; es kann auch durch eine Umbiegung dieses Teils 132 um eine zu dem Halteprofil 127 parallele Kante gebildet und dadurch mit diesem verbunden sein. Werden nun die Innengewindeelemente 138 festgezogen, so wird nicht nur das Tragseil 15 gegen die Unterseite des Spann- oder Klemmelements 132 gepreßt und dadurch fixiert; gleichzeitig wird auch mittels des steifen Elements 139 das Halteprofil 127 fest in seinen durch die Hinterschneidungsbereiche des Spann- oder Klemmelements 132 gebildeten Sitz gepreßt und solchermaßen ebenfalls arretiert. Damit sich hierbei die Arretierungskräfte weitgehend gleichmäßig aufteilen, kann zwischen dem ebenen Boden 140 des Spann- oder Klemmelements 132, dessen Seitenschenkel 131 und dem steifen Element 139 ein Keil 141, bspw. aus Hartgummi oder einem ähnlich "harten" Elastomer, aber ggf. auch aus Metall, eingesetzt sein. Wenn dieser Keil 141 bis etwa an den Fußbereich bzw. die Kante 126 des Halteprofils 127 heranreicht, kann er sich nicht weiter verschieben bzw. preßt zusätzlich gegen das Halteprofil 127, um dieses festzulegen. Vorzugsweise wird der Keil 141 wie auch der Boden 140 und das steife Element 139 von je zwei Öffnungen zum Hindurchtritt je eines Schenkels des U-förmigen Bügels 137 durchsetzt.

Da bei der Ausführungsform 121 kein Solarpaneel 111 direkt an der Unterseite des oberen Schenkels 123 des Halteprofils 127 anliegt, können mittels einer Hinterschneidung ähnlich der Seitenschenkel 131 nahezu beliebige Zusatzelemente oberhalb der Halteprofile 127 befestigt werden. Hierbei ist bspw. an Stützkonstruktionen zu denken, welche eine Neigung der Ebene eines Solarpaneels gegenüber der Ebene der Tragelemente 15 herbeiführen.

Ein weiterer Vorzug der Ausführungsform 121 liegt darin, dass die Halteprofile 127 während einer Lagerungsphase platzsparend aneinandergeschoben werden können.

Dies gilt insbesondere auch für das Halteprofil 152 der Ausführungsform 151, welches etwa den folgenden Querschnitt aufweist: <. Dieser besteht aus einem Mittelsteg 153 mit einem um einen Winkel von weniger als 90° in eine erste Richtung (nach unten) umgebogenen Ansatz 154 an der einen Endkante und einem zweiten Ansatz 155 an der gegenüberliegenden Endkante, der in die andere Richtung (nach oben) um mehr als 90° (zurück) umgebogen ist.

Das dazu passende Spann- oder Klemmelement 156 ist mittels Laser aus einem Edelstahlblech ausgeschnitten und anschließend U-förmig gebogen. Die beiden freien Außenkanten 157 der Seitenschenkel 158 haben in einem mittleren Abschnitt einen an den Querschnitt des Halteprofils 152 angepaßten Bereich. Dieser zeichnet sich aus durch einen schräg verlaufenden Einschnitt 159 zur Aufnahme des ersten Ansatzes 154 sowie aus einer V-förmigen Kerbe 160 zur Aufnahme des anderen Ansatzes 155.

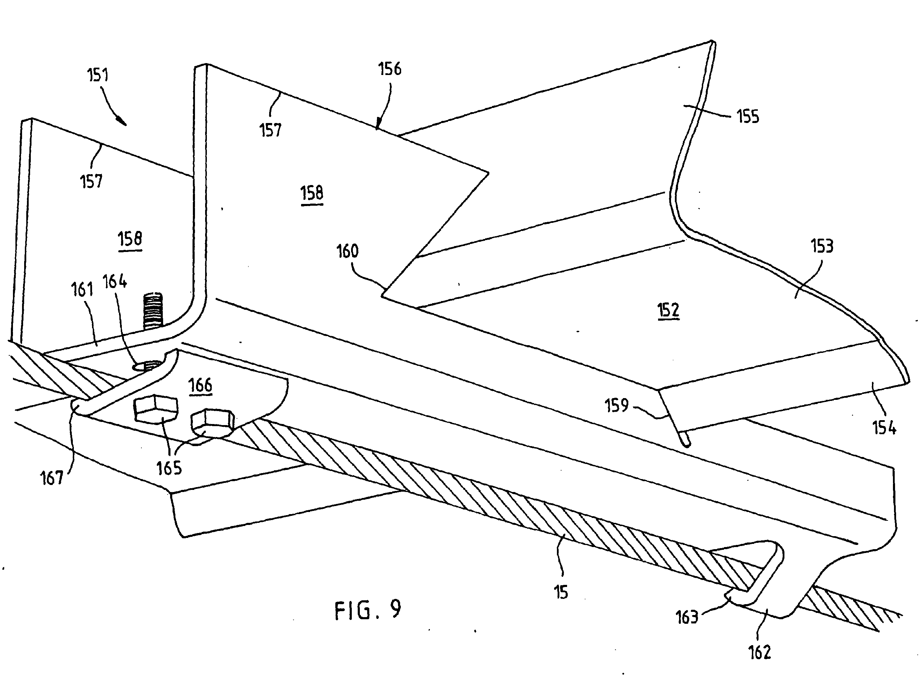

An dem Mittelsteg 161 des Spann- oder Klemmelements 156 ist im Bereich eines Endes, vorzugsweise näher dem schrägen Einschnitt, ein Hakenelement 162 vorgesehen. Dieses ist entgegen den Seitenschenkeln 158 aus der Ebene des Mittelstegs 161 herausgebogen, um gegenüber dem Drahtseil 15 leichtgängig verschiebbar zu sein. Ein zurückgebogenes Widerhakenelement 163 an seinem Ende umgreift das Drahtseil und hält dieses in der eingehakten Position gemäß Fig. 9 fest.

An seinem anderen Ende weist der Mittelsteg 161 des Spann- oder Klemmelements 156 ein oder vorzugsweise zwei Bohrungen 164 auf. Dort kann mittels Maschinenschrauben 165 ein Klemmplättchen 166 mit leicht umgebogenen Kanten 167 festgeschraubt werden, unter dem das Drahtseil 15 einklemmbar ist. Die umgebogenen Kanten 167 erfüllen dabei eine ähnliche Funktion wie das Widerhakenelement 163. Da die Maschinenschrauben 165 zum Einlegen des Drahtseils 15 unter das Klemmplättchen 166 nicht vollständig gelöst werden müssen, läßt sich das Spann- oder Klemmelement 156 mittels weniger Handgriffe an einem Drahtseil 15 festlegen. Gleichzeitig kann zur Fixierung des Halteprofils 152 an der Innenseite des Mittelstegs 161 eine weitere Platte vorgesehen sein, die von den Schrauben 165 ebenfalls durchgriffen und bei deren Festziehen gemeinsam mit dem Klemmplättchen 166 fixiert wird. Diese Platte kann den zweiten, zurückgebogenen Ansatz 155 des Halteprofils 152 übergreifen und dadurch festklemmen.

## Patentansprüche

1. System zur Festlegung flächiger Solarkomponenten (111) an Punktfundamenten oder -verankerungen, umfassend wenigstens zwei langgestreckte Tragelemente (15), wenigstens zwei langgestreckte Halteprofile (103;127) und wenigstens zwei Spann- oder Klemmelemente, wobei zwischen den Punktfundamenten oder -verankerungen langgestreckte Tragelemente (15), insbesondere gespannte Drahtseile, verlegt oder verlegbar sind, und wobei an den Tragelementen (15) oder an zwischen diesen festgelegten, weiteren langgestreckten Tragelementen (15) wenigstens zwei langgestreckte, zu den Tragelementen (15) vorzugsweise windschief oder winklig, insbesondere etwa orthogonal verlaufende Halteprofile (103;127) festlegbar sind, und wobei die Halteprofile (103;127) entlang der Tragelemente (15) aufeinander zu bzw. an eine dazwischen eingesetzte Solarkomponente (111) heranschiebbar und/oder anpressbar sind, **dadurch gekennzeichnet, dass**
a) die Halteprofile (103;127) einen wenigstens eine Aufnahmetasche aufweisenden Querschnitt haben mit wenigstens zwei Schenkeln (108, 109) und einem Schlitz zwischen den beiden Schenkeln (108, 109), worin ein Solarmodul (111) einschiebbar und festklemmbar ist, bspw. in der Form eines **U** oder **V,** oder mit zwei entgegengesetzt geöffneten Aufnahmetaschen, bspw. **H, N, X** oder **K,** wobei
b) wenigstens zwei Halteprofile (103;127) einander zugekehrte Aufnahmetaschen aufweisen, so dass eine Solarkomponente (111) mit je einer Kante in diese einschiebbar und/oder eingeschoben ist, und wobei
c) die Halteprofile (103;127) durch an den Tragelementen (15) festklemmbar Stütz-, Spann- und/oder Klemmelemente (104; 132; 156) festlegbar sind, welche jeweils im Bereich ihres einen Endes ein Hakenelement (162) aufweisen zum Einhängen an einem Tragelement (15), sowie im Bereich ihres gegenüberliegenden Endes jeweils ein Klemmelement (166) zum Festklemmen an dem betreffenden Tragelement (15).

2. System nach Anspruch 1, **gekennzeichnet durch**
a) ein Ankerelement (2) oder eine Verankerungseinrichtung, das/die an einem Bauwerk, bspw. Hauswand, Dachstuhl oder Mauer, oder an einem Fundament festgelegt oder festlegbar ist;
b) ein Ösen- oder Hakenelement (3) zur Fixierung eines zu spannenden Seils od. dgl., mit einem Schaft (14), der an dem Ankerelement (2) oder einem Teil der Verankerungseinrichtung festlegbar ist; sowie
c) ein sowohl relativ gegenüber dem Ankerelement (2) oder der Verankerungseinrichtung einerseits als auch gegenüber dem Ösen- oder Hakenelement (3) andererseits bewegbares Spannelement, um das Ösen- oder Hakenelement (3) in einer definierten Richtung zu verschieben und damit ein daran befestigtes Stahlseil od. dgl. zu spannen.

3. System nach Anspruch 2, **dadurch gekennzeichnet, dass** ein Teil der Verankerungseinrichtung derart ausgebildet ist, dass daran sowohl ein Ösen- oder Hakenelement (3) zur Fixierung eines zu spannenden Seils od. dgl. festlegbar ist als auch ein der Verstellung der Bewegungsrichtung des Spannelements dienendes Teil.

4. System nach Anspruch 3, **dadurch gekennzeichnet, dass** das der Verstellung der Bewegungsrichtung des Spannelements dienende Teil gegenüber der Verankerungseinrichtung um eine Achse schwenkbar ist.

5. System nach Anspruch 4, **dadurch gekennzeichnet, dass** die Schwenkachse quer, d.h. schräg oder vorzugsweise etwa rechtwinklig zu der Bewegungsrichtung des Spannelements orientiert ist.

6. System nach einem der vorhergehenden Ansprüche, **dadurch gekennzeichnet, dass** zwischen zwei zueinander etwa parallel verlaufenden, langgestreckten Elementen, insbesondere Stahlseilen, wenigstens ein stangenartiges Element festgelegt ist.

7. System nach Anspruch 6, **dadurch gekennzeichnet, dass** zwei Seile, zwischen denen wenigstens ein stangenartiges Element festgelegt ist, in ihrer Längsrichtung gegeneinander verstellbar sind.

8. System nach einem der vorhergehenden Ansprüche, **dadurch gekennzeichnet, dass** zwei zueinander etwa parallel verlaufende, langgestreckte Elemente, insbesondere Stahlseile, an der selben Verankerungseinrichtung befestigt sind.

9. System nach Anspruch 7 in Verbindung mit Anspruch 8, **dadurch gekennzeichnet, dass** an einem Teil der Verankerungseinrichtung ein Bügel, insbesondere ein zweiarmiger Bügel, festgelegt oder festlegbar ist, der in Längsrichtung des Bügels gegeneinander versetzte Elemente zum Befestigen und/oder Spannen der daran zusammengeführten, langgestreckten Elemente, insbesondere Stahlseile, aufweist.

10. System nach Anspruch 9, **dadurch gekennzeichnet, dass** der Bügel um eine Achse verschwenkbar ist, die quer zu seiner Längsrichtung verläuft.

## Claims

1. Device for fixing flat solar components (111) on individual footing or anchoring, containing at least two extended carrier elements (15), at least two extended holding elements (103;127) and at least two spanning or clamp elements, whereas between the individual footing or anchoring, extended carrier elements (15), especially spanned wire cables, are transferred or transferable, and whereas on the carrier elements (15) or on between these fixed, further extended carrier elements (15) at least two extended for the carrier elements, (15) preferably crooked or angular, especially orthogonal holding elements (103;127) are fixable, and whereas the holding elements (103;127) along the carrier elements (15) can be pushed to one another or to an included solar component in between (111) and/or can be pressed, **characterised in that**
a) the holding elements (103;127) show a cross-section with at least one taking up bag with at least two sides (108, 109) and a slit between the two sides (108, 109), where a solar module (111) can be pushed in and can be clamped, e. g. in the form of **U** or **V,** or with two opposite open taking up bags, e. g. **H, N, X** or **K,** whereas
b) at least two holding elements (103;127) show opposite facing taking up bags, so that a solar component (111) with an edge each can be pushed in and/or is pushed in, and whereas
c) the holding elements (103;127) are fixable through the carrier elements (15) having fixable support, spanning and/or clamp elements (104;132;156), which have in the area of its one end each one hook element (162) for putting it on the hinges of a carrier element (15), as well as in the area of its opposite end a clamp element each (166) for clamping it on the affected carrier element (15).

2. Device according to claim 1, **characterised in that**
a) an anchor element (2) or an anchoring installation, which are fixed or fixable on a building, e. g. the outer wall of a house, a roof timbering or a wall;
b) an eye or hook element (3) for fixing a cable which must be spanned or something similarly, with a shaft (14), which is fixable on the hook element (2) or on a part of the anchoring installation; as well as
c) a relative compared with the hook element (2) or the anchoring implant on the one hand as well as compared with the eye or hook element (3) but on the other hand manoeuvrable spanning element, that the eye or hook element (3) can be pushed into one certain direction and to span a fixed steel cable or something similar.

3. Device according to claim 2, **characterised in that,** a part of the anchoring implant built in the way, that both an eye or hook element (3) for fixing a cable which must be spanned or something similar, is fixable as well as a component which can change the direction of motion of the spanning element.

4. Device according to claim 3, **characterised in that** the component of the spanning element for adjustment of the direction of motion compared with the anchoring implant can be turned by an axis.

5. Device according to claim 4, **characterised in that** the swing axis is orientated diagonally or preferably rectangular to the direction of motion of the spanning element.

6. Device according to any one of the preceding claims, **characterised in that** between two parallel running extended elements, especially steel cables, at least one element in shape of a rod is fixed.

7. Device according to claim 6, **characterised in that** two cables, between which at least one element in shape of a rod is fixed, are adjustable towards one another in their longitudinal direction.

8. Device according to any one of the preceding claims, **characterised in that** two parallel running extended elements, especially steel cables, are fixed on the same anchoring implant.

9. Device according to claim 7 in connection with claim 8, **characterised in that** on one component of the anchoring implant a handle, especially a two-armed handle is fixed or fixable, which has against each other staggered elements in longitudinal direction for fixing and/or spanning of the extended elements which are merged on them, especially steel cables.

10. Device according to claim 9, **characterised in that** the handle is swivelling by an axis, which runs diagonally to its longitudinal direction.

## Revendications

1. Système pour fixer des composants solaires (111) plans sur des fondations ponctuelles ou des ancrages, comprenant au moins deux éléments porteurs (15) allongés, au moins deux profilés de support allongés (103 ; 127) et au moins deux éléments de serrage ou de blocage, des éléments porteurs allongés (15), en particulier des câbles métalliques tendus, étant ou pouvant être posés entre les fondations ponctuelles ou ancrages, et au moins deux profilés de support (103 ; 127) allongés, en particulier approximativement orthogonaux et de préférence gauche ou en angle par rapport aux éléments porteurs (15), pouvant être fixés aux éléments porteurs (15) ou à d'autres éléments porteurs (15) allongés disposés entre ces derniers, et les profilés de support (103 ; 127) le long des éléments porteurs (15) pouvant être rapprochés en poussant et/ou en exerçant une pression sur un composant solaire (111) intercalé, **caractérisé en ce que**
a) les profilés de support (103 ; 127) ont une section présentant au moins une poche réceptrice avec au moins deux côtés (108, 109) et une fente entre les deux côtés (108, 109), dans laquelle un module solaire (111) peut être inséré et bloqué, par exemple en forme de U ou de V, ou avec deux poches réceptrices opposées ouvertes, par exemple H, N, X ou K, où
b) au moins deux profilés support (103 ; 107) présentent deux poches réceptrices tournées l'une vers l'autre de sorte qu'un bord respectif d'un composant solaire (111) puisse y être introduit et/ou y soit introduit, et où
c) les profilés de support (103 ; 127) peuvent être fixés aux éléments porteurs (15) par l'intermédiaire des éléments d'appui, de serrage et/ou de blocage (104 ; 132 ; 156), lesquels présentent respectivement à une de leur extrémité un élément à crochet (162) à accrocher à un élément porteur (15) ainsi qu'un élément de blocage (166) dans la zone de leur extrémité opposée pour le serrage sur l'élément porteur (15) correspondant.

2. Système selon la revendication 1, **caractérisé en ce que**
a) un élément d'ancrage (2) ou un dispositif d'ancrage qui est fixé ou peut être fixé à un bâtiment, par exemple à un mur de maison, une charpente ou un mur, ou bien à des fondations ;
b) un élément à anneau ou à crochet (3) pour fixer un câble ou sim. qui doit être tendu, avec une tige (14) qui peut être fixée à l'élément d'ancrage (2) ou à une partie du dispositif d'ancrage ; et
c) un élément de serrage mobile, d'une part, non seulement par rapport à l'élément d'ancrage (2) ou le dispositif d'ancrage mais aussi, d'autre part, par rapport à l'élément à anneau ou à crochet (3) pour déplacer l'élément à anneau ou à crochet (3) dans un sens défini et ainsi pour tendre un câble d'acier ou sim. qui y est fixé.

3. Système selon la revendication 2, **caractérisé en ce qu'**une partie du dispositif d'ancrage est telle qu'il est possible d'y fixer aussi bien un élément à anneau ou à crochet (3) pour la fixation d'un câble ou sim. qui doit être tendu, qu'un élément servant au réglage du sens de déplacement de l'élément de serrage.

4. Système selon la revendication 3, **caractérisé en ce que** l'élément servant au réglage du sens de déplacement de l'élément de serrage peut pivoter d'un axe par rapport au dispositif d'ancrage.

5. Système selon la revendication 4, **caractérisé en ce que** l'axe de pivotement est orienté transversalement, c'est-à-dire incliné ou de préférence approximativement perpendiculaire par rapport au sens de déplacement de l'élément de serrage.

6. Système selon l'une des revendications précédentes, **caractérisé en ce que** au moins un élément en forme de barres est fixé entre deux éléments allongés approximativement parallèles les uns par rapport aux autres, en particulier des câbles d'acier.

7. Système selon la revendication 6, **caractérisé en ce que** deux câbles entre lesquels est fixé au moins un élément en forme de barres sont réglables dans leur sens longitudinal.

8. Système selon l'une des revendications précédentes, **caractérisé en ce que** deux éléments allongés approximativement parallèles, en particulier des câbles d'acier, sont fixés au même dispositif d'ancrage.

9. Système selon la revendication 7 en association avec la revendication 8, **caractérisé en ce qu'**un étrier, en particulier un étrier à deux bras, est fixé ou peut être fixé à une partie du dispositif d'ancrage qui présente dans le sens longitudinal de l'étrier des éléments décalés les uns par rapport aux autres pour la fixation et/ou le serrage des éléments allongés regroupés, en particulier des câbles d'acier.

10. Système selon la revendication 9, **caractérisé en ce que** l'étrier peut être amené à pivoter d'un axe qui est transversal par rapport à son sens longitudinal.
